# EUROPEAN PATENT APPLICATION

(11) **EP 4 700 392 A1**
(43) Date of publication of application: **25.02.2026**
(21) Application number: 24792370.9
(22) Date of filing: 29.02.2024
(51) Int. Cl.: G01N 35/10

(54) **AUTOMATIC ANALYSIS DEVICE AND AUTOMATIC ANALYSIS METHOD**

(30) Priority: 20.04.2023 JP 2023069662
(71) Applicant: HITACHI HIGH-TECH CORPORATION, Tokyo 105-6409 (JP)
(72) Inventor: EGUCHI Saori, Tokyo 105-6409 (JP); TAKAKURA Tatsuki, Tokyo 105-6409 (JP); UMEKI Hiroya, Tokyo 105-6409 (JP); YASUKAGAWA Mami, Tokyo 105-6409 (JP)
(74) Representative: MERH-IP Matias Erny Reichl Hoffmann Patentanwälte PartG mbB
(86) International application number: PCT/JP2024/007627
(87) International publication number: WO 2024/219094

(57) **Abstract**

[Problem]

To provide an automatic analyzer and an automatic analysis method that can make contamination caused by adhesion of a liquid to the surface of a probe tip less than before and more stabilize the liquid discharge amount.

[Solution]

The automatic analyzer comprises a sample dispensing mechanism 20 having a dispensing probe 21 to discharge a liquid into a reaction container 31, and an analysis control unit 2 to control operation of the sample dispensing mechanism 20. When, with a first liquid contained in the reaction container 31, a second liquid is further discharged, the analysis control unit 2 controls the sample dispensing mechanism 20 so that the tip of the dispensing probe 21 is immersed in the liquid after completion of discharge of the second liquid.

## Description

### Technical Field

The present invention relates to an automatic analyzer and an automatic analysis method.

### Background Art

Examples of an automatic analyzer for analyzing components such as blood, urine, and spinal fluid of a patient include an automatic biochemical analyzer for measuring an amount of transmitted light or scattered light obtained by irradiating a reaction liquid of a sample and a reagent with light, and an automatic immunoanalyzer for measuring an amount of luminescence from a labeled substance by causing a reagent to which the labeled substance is attached to react with a sample.

In these automatic analyzers, a technique for preventing, when a liquid aspirated by a dispensing probe is discharged to a reaction container, the liquid from adhering to a surface of a tip of the probe is disclosed (see PTL 1).

### Citation List

### Patent Literature

PTL 1: JP5222771B

### Summary of Invention

### Technical Problem

In the technique disclosed in PTL 1, a gap between a bottom surface of the reaction container and the tip of the probe is kept constant when dispensing the sample, and the probe is ascended while dispensing the sample, thereby reducing the adhesion of the sample to a side surface of the probe and improving dispensing precision.

On the other hand, in the technique of PTL 1, since the tip of the probe performs discharging without being immersed in a liquid level, the probe may be ascended in a state where the sample cannot be completely discharged, particularly, the sample is partially adhered to the tip of the probe, and thus it has been found that there is room for more accurate small-amount dispensing.

An object of the invention is to provide an automatic analyzer and an automatic analysis method capable of reducing contamination caused by liquid adhesion on a probe tip surface as compared with the related art and further stabilizing a liquid discharge amount.

### Solution to Problem

The invention includes a plurality of means for solving the above-described problems, and an example thereof includes: a dispensing mechanism having a probe to discharge a liquid into a container; and a control unit to control operation of the dispensing mechanism. When, with a first liquid contained in the container, a second liquid is further discharged, the control unit controls the dispensing mechanism so that a tip of the probe is immersed in the liquid after completion of discharge of the second liquid.

### Advantageous Effects of Invention

According to the invention, it is possible to reduce contamination of the probe tip surface caused by liquid adhesion as compared with the related art, and to further stabilize the liquid discharge amount. Problems, configurations, and effects other than those described above will be clarified by description of the following embodiments.

### Brief Description of Drawings

[Fig. 1] Fig. 1 is a plan view that schematically shows a general configuration of an automatic analyzer according to Embodiment 1.
[Fig. 2] Fig. 2 is a block diagram that schematically shows the general configuration of the automatic analyzer according to Embodiment 1.
[Fig. 3] Fig. 3 is a diagram that schematically shows the configuration of a dispensing mechanism of the automatic analyzer according to Embodiment 1.
[Fig. 4] Fig. 4 is a flowchart that explains the flow of analysis operation in the automatic analyzer according to Embodiment 1.
[Fig. 5] Fig. 5 is a flowchart that explains the flow of sample dispensing operation in the automatic analyzer according to Embodiment 1.
[Fig. 6] Fig. 6 is a diagram that schematically shows how a dispensing probe moves when the sample dispensing mechanism of the automatic analyzer according to Embodiment 1 performs second phase sample dispensing.
[Fig. 7] Fig. 7 is a diagram that schematically shows how the dispensing probe moves when the sample dispensing mechanism of the automatic analyzer according to Embodiment 1 performs second phase sample dispensing.
[Fig. 8] Fig. 8 is a diagram that schematically shows how the dispensing probe moves when the sample dispensing mechanism of the automatic analyzer according to Embodiment 1 performs second phase sample dispensing.
[Fig. 9] Fig. 9 is a diagram that schematically shows how the dispensing probe moves when the sample dispensing mechanism of the automatic analyzer according to Embodiment 1 performs second phase sample dispensing.
[Fig. 10] Fig. 10 is a diagram that schematically shows how the dispensing probe moves when the sample dispensing mechanism of the automatic analyzer according to Embodiment 2 performs second phase sample dispensing.

### Description of Embodiments

Hereinafter, embodiments of an automatic analyzer and an automatic analysis method of the invention will be described with reference to the drawings.

In the drawings used in the present description, the same or corresponding components are denoted by the same or similar reference signs, and repeated descriptions of these components may be omitted.

In the following embodiment, it is needless to mention that components (also including element steps and the like) thereof are not necessarily essential unless otherwise specified or unless clearly considered to be essential in principle.

Further, the embodiments described below are an example, and can be modified without departing from the gist. Features illustrated or described together with one exemplary aspect may be combined with features of another aspect.

### < Embodiment 1>

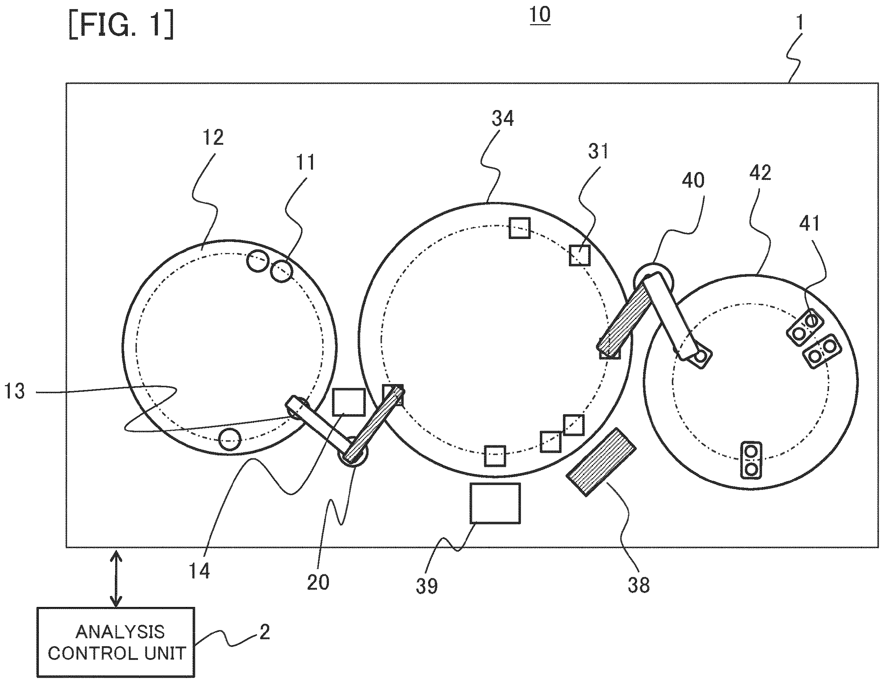

An automatic analyzer and an automatic analysis method according to Embodiment 1 of the invention will be described with reference to Figs. 1 to 9.

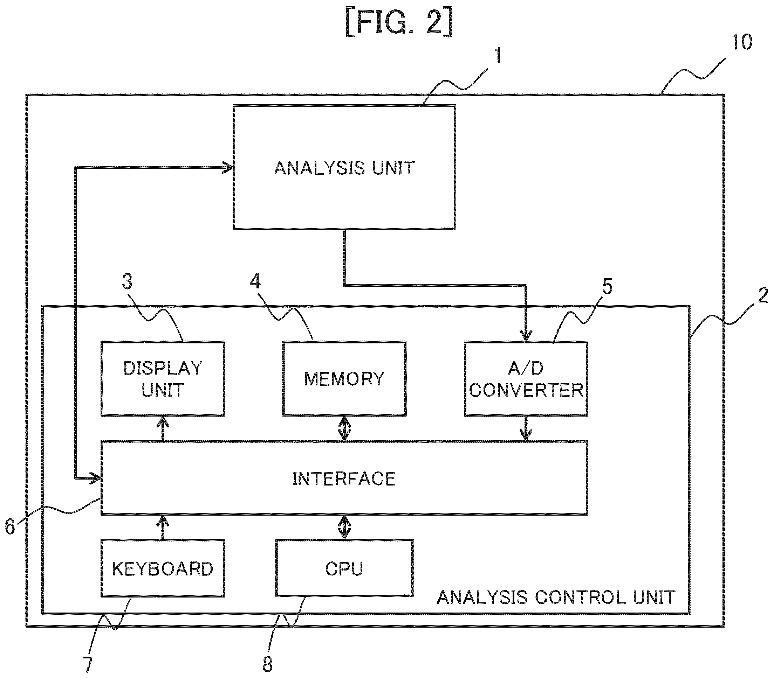

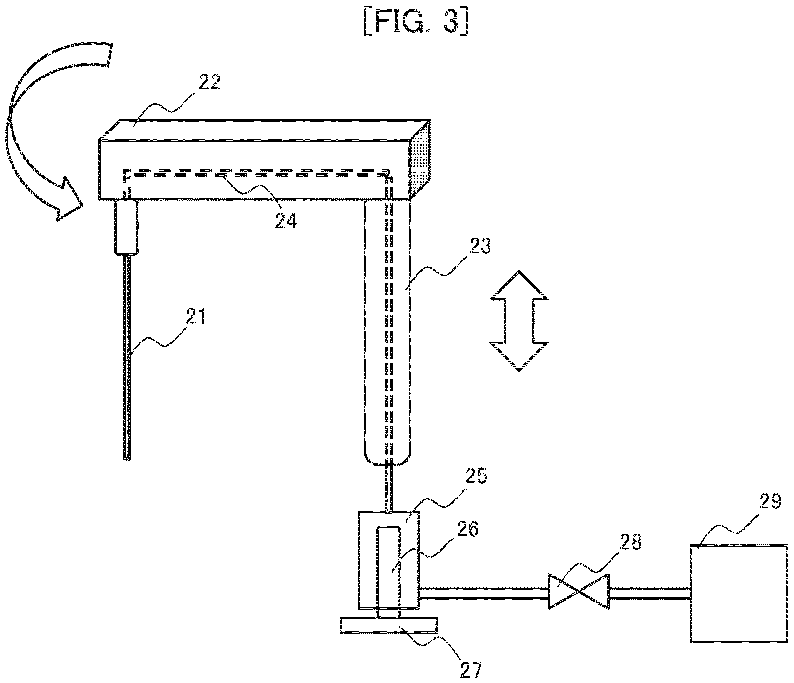

First, a configuration of the automatic analyzer will be described with reference to Figs. 1 to 3. Fig. 1 is a plan view schematically showing the configuration of the automatic analyzer, Fig. 2 is a block diagram schematically showing an overall configuration of the automatic analyzer, and Fig. 3 is a diagram schematically showing a configuration of a dispensing mechanism.

As shown in Figs. 1 and 2, the automatic analyzer 10 of the present embodiment mainly includes an analysis unit 1 that analyzes a liquid sample, and an analysis control unit 2 that controls operation of each mechanism of the analysis unit 1.

Of these units, the analysis unit 1 includes a sample dispensing mechanism 20, a sample holding section 12, a reaction disk 34, a reagent dispensing mechanism 40, a reagent holding section 42, a measuring section 39, a cleaning mechanism 38, and the like.

The sample holding section 12 has a configuration in which a plurality of sample containers 11, each of which contains a sample to be analyzed in an analysis process, are held in an annular shape. The sample holding section 12 is rotatable and has a disk shape. The sample holding section 12 transports, by rotation operation thereof, each of the sample containers 11 to be dispensed to a sample aspiration position 13 of the sample dispensing mechanism 20.

The sample holding section 12 may be configured such that two sample holding sections 12 can be physically switched for use. As operation, the two sample holding sections 12 can be alternately switched, or a sample can be added or replaced halfway via a small window provided in the sample holding section 12. However, it is not necessary for the user to set up the sample holding section 12 by himself/herself, and it is also possible to adopt a form in which transportation is performed using a transport mechanism or the like. In addition, the invention is not limited to a disk type in which the sample container is transported by the rotation operation as shown, and a rack type in which a plurality of sample containers are collectively transported can be used.

The reaction disk 34 holds a plurality of reaction containers 31 for performing a reaction and measurement. This reaction disk 34 is rotatable and has a disk shape. Each of the reaction container 31 contains a mixed liquid obtained by mixing a sample and a reagent to cause a reaction thereof.

The sample dispensing mechanism 20 aspirates the sample from the sample container 11 transported to the sample aspiration position 13 by the sample holding section 12. Thereafter, the sample dispensing mechanism 20 dispenses the aspirated sample into the reaction container 31 held by the reaction disk 34.

As shown in Fig. 3, the sample dispensing mechanism 20 includes a dispensing probe 21, a dispensing arm 22, and a vertical and rotary motion section 23.

The dispensing probe 21 is attached to one end of the dispensing arm 22, and the dispensing arm 22 is connected to the dispensing probe 21 and the vertical and rotary motion section 23.

The vertical and rotary motion section 23 has a two-axis movement mechanism for vertical (vertical direction) movement and rotation. The dispensing probe 21 can be vertically and rotationally moved by the vertical and rotary motion section 23. Accordingly, the dispensing mechanism can move to the sample container 11 at the sample aspiration position to aspirate the sample, and can move to a sample discharge position where the reaction container 31 is set to discharge the aspirated sample. In addition, a tip of the dispensing probe 21 can move to a position of a dispensing mechanism cleaning section 14 (see Fig. 1) that cleans the tip with cleaning water or the like. Operation of the vertical and rotary motion section 23 is controlled by the analysis control unit 2.

A dispensing flow path 24 is a flow path of the dispensing mechanism passing through an inside of the dispensing arm 22 and the vertical and rotary motion section 23. The dispensing probe 21 is connected to a cylinder 25 via the dispensing flow path 24 in the dispensing arm 22. The cylinder 25 includes a plunger 26 and a plunger driving means 27, and is connected to a water supply pump 29 through a valve 28.

Aspiration operation and discharge operation performed by the sample dispensing mechanism 20 are executed by vertical operation (reciprocating motion) of the plunger 26 fixed to the cylinder 25. A working fluid (for example, pure water referred to as system water) is filled from the tip of the dispensing probe 21 to the cylinder 25 and the water supply pump 29 through the dispensing flow path 24.

The sample dispensing mechanism 20 is not limited to the configuration in which each position is accessed by the rotation operation as shown in the drawing, and may have a configuration in which each position is accessed by a linear operation.

The dispensing mechanism cleaning section 14 is a mechanism for cleaning inner and outer walls of the tip of the dispensing probe 21 of the sample dispensing mechanism 20. A nozzle for supplying a probe cleaner for cleaning the outer wall of the dispensing probe 21 and a flow path for discharging the cleaning water are provided. In addition, a vacuum chamber for vacuum-drying the wet tip of the probe is provided nearby.

The reagent holding section 42 holds a plurality of reagent containers 41 each containing a reagent to be reacted in the reaction container 31 and used in the analysis process, and includes a reagent disk and a reagent container holding section (both are omitted for convenience of illustration). The reagent holding section 42 has a cold keeping function for improving on-board stability of reagent properties. Each of the reagent containers 41 is filled with a reagent for mixing and reacting with a sample, a reagent, a detergent, or the like necessary for pretreatment of analysis.

In the reagent holding section 42, in a case of a disk type, the reagent holding section 42 rotates before reagent dispensing to transport an appropriate reagent container to the reagent aspiration position, and thus the reagent dispensing mechanism 40 can aspirate the reagent necessary for analysis. The reagent containers 41 may include a plurality of different reagent bottles.

The reagent dispensing mechanism 40 is a mechanism that dispenses the reagent or detergent filled in the reagent container 41 into the reaction container 31 held by the reaction disk 34. The reagent dispensing mechanism 40 dispenses the reagent or the detergent at a specified timing in a process including analysis or pretreatment and cleaning. A configuration of the reagent dispensing mechanism 40 is substantially the same as that of the sample dispensing mechanism 20.

The measuring section 39 measures a concentration and the like of a substance to be measured from the mixed liquid of the sample and the reagent during the reaction or after the reaction in the reaction container 31. A measurement method includes a method of measuring transmitted light, a method of measuring an amount of luminescence, and the like, and varies depending on the substance to be measured. The measurement method is not limited, and the number of the measurement method is not limited to one, and may be two or more.

The cleaning mechanism 38 includes a discharge nozzle that discharges the cleaning water and the detergent, an aspiration nozzle that aspirates a reaction liquid and the like, and the like. The cleaning mechanism 38 cleans the reaction container 31 with the cleaning water and the detergent.

The analysis control unit 2 is electrically connected to each mechanism of the analysis unit 1, and is a unit that controls the operation of each mechanism of the analysis unit 1 including the sample dispensing mechanism 20. The analysis control unit 2 can be implemented by, for example, a computer including a display unit 3 implemented by a liquid crystal display or the like, a memory 4 implemented by a hard disk memory or an external memory, an A/D converter 5, an interface 6, an input device such as a keyboard 7, and a CPU 8, and may be implemented by another computer as a single computer, and is not particularly limited.

In the present embodiment, the analysis control unit 2 controls the operation of the sample dispensing mechanism 20 such that when, with a first liquid contained in the reaction container 31, a second liquid is further discharged, the tip of the dispensing probe 21 is immersed in a liquid after the discharge of the second liquid is completed. When the discharge of the second liquid is started, the sample dispensing mechanism 20 can be controlled such that the tip of the dispensing probe 21 discharges the second liquid from above a liquid level of the liquid in a vertical direction. Further, when the first liquid is discharged to the reaction container 31, the sample dispensing mechanism 20 can be controlled such that the tip of the dispensing probe 21 is immersed in the liquid after the discharge of the first liquid is completed. Details will be described below.

The CPU 8 sends a command to the analysis control unit 2 and the like to control the operation of each mechanism. A/D-converted data (photometric value) obtained from the analysis unit 1 via the A/D converter 5 is taken into the CPU 8. The CPU 8 performs an arithmetic process using the taken data (photometric value). That is, the CPU 8 can control each mechanism of the analysis unit 1 via the analysis control unit 2, and can perform the arithmetic process of data.

The memory 4 as a recording device and the keyboard 7 for inputting operation commands and the like are connected to the interface 6. The memory 4 stores information such as analysis parameters, analysis item requests, a calibration result, and an analysis result.

The control of the operation of each device is executed by the analysis control unit 2 based on various programs recorded in the storage device. Operation control processes to be executed by the analysis control unit 2 may be integrated in one program, or may be separated into multiple programs, or may be a combination thereof. A part or an entire program may be implemented by dedicated hardware or may be modularized.

The display unit 3 includes a user interface such as a touch panel display, and outputs information to a user and receives various inputs from the user.

The above is the configuration of the automatic analyzer 10 of the embodiment.

In such an automatic analyzer 10, color development, luminescence, and the like caused by a reaction between a target component in the sample and the reagent are measured by the measuring section 39, and a concentration of the target component in the sample is calculated by the arithmetic process of the analysis control unit 2.

Further, the configuration of the automatic analyzer 10 is not limited to a form of a single analysis module configuration as shown in Fig. 2, and may be configured such that two or more analysis modules capable of measuring various same or different analysis items or pretreatment modules for performing pretreatment are connected by a transportation device.

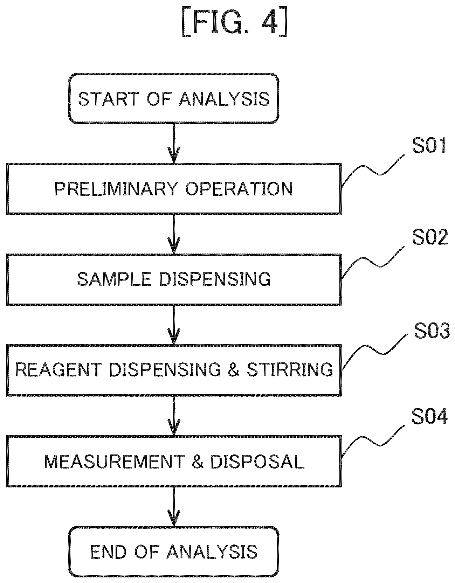

Next, a characteristic configuration and operation of the present embodiment will be described with reference to Fig. 4 and subsequent drawings.

In the following description, a case where both the first liquid and the second liquid are samples will be described, but at least one of the first liquid and the second liquid may be a different liquid other than the sample. In addition, a case where a discharge amount of the first liquid and a discharge amount of the second liquid are the same amount will be described, but the discharge amount of any one of the liquids can be larger than the other.

First, with reference to Fig. 4, a series of analysis operation in the automatic analyzer 10 as described above (operation of dispensing the sample, mixing the sample with the reagent, causing the sample and the reagent to react, measuring absorbance, and obtaining the concentration) will be described.

The user places the sample in the sample container 11 such as a test tube and sets the sample in the sample holding section 12. The user requests an analysis item to be measured for the sample using the keyboard 7 and starts the measurement.

### (Fig. 4: Step S01: Preliminary Operation)

Upon receiving an input of a command signal for starting an analysis operation from the CPU 8 via the interface 6, the analysis control unit 2 rotates the sample holding section 12 in the analysis unit 1 to transport the sample container 11 to an access position (sample aspiration position 13) of the sample dispensing mechanism 20.

### (Fig. 4: Step S02: Sample Dispensing)

Next, when moving the sample dispensing mechanism 20 to the sample aspiration position 13 by rotational movement and vertical movement, the analysis control unit 2 aspirates the sample from the sample container 11 into the dispensing probe 21. After aspirating the sample, the analysis control unit 2 moves, by the vertical movement and the rotational movement, the sample dispensing mechanism 20 to above the reaction container 31 set at the sample discharge position, and discharges a specified amount of the sample. Details of the operation will be described later.

### (Fig. 4: Step S03: Reagent Dispensing and Stirring)

The analysis control unit 2 rotationally moves the reaction container 31 in which the discharge of the specified amount of the sample is finished to a reagent discharging position. Further, the analysis control unit 2 causes the reagent dispensing mechanism 40 to aspirate a specified amount of the reagent from the reagent container 41 and discharge the reagent into the reaction container 31. When dispensing a plurality of types of reagents according to measurement items, the operation of dispensing the reagent is repeated as appropriate. Thereafter, the reaction between the sample and the reagent proceeds in the reaction container 31.

### (Fig. 4: Step S04: Measurement and Disposal)

After stirring the reaction liquid, in the automatic analyzer 10, the measuring section 39 measures signal values of color development and luminescence of the mixed liquid in the reaction container 31 at a specified position and timing. The arithmetic process is performed in the analysis control unit 2 based on the measured signal values, and the concentration of the target component is calculated as a measurement result. In addition, the analysis control unit 2 cleans the reaction container 31, in which the measurement is completed, by the cleaning mechanism 38 as necessary, and prepares for next analysis.

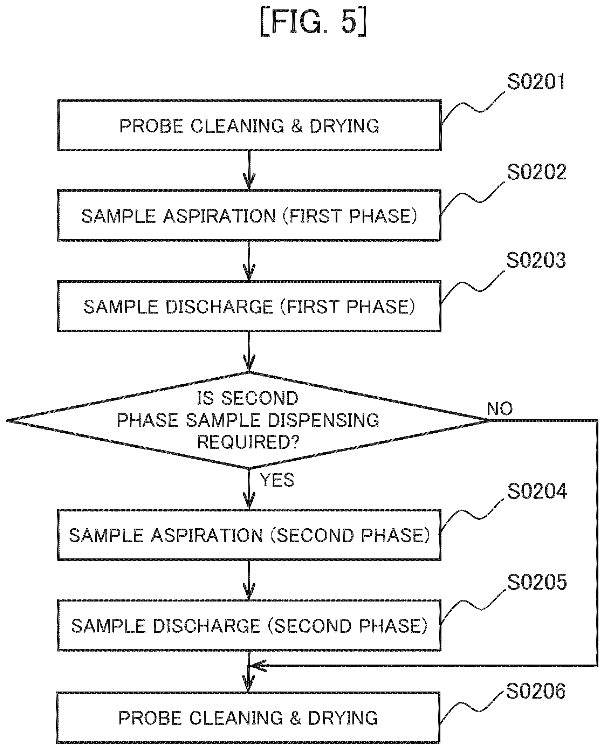

Fig. 5 is a flowchart showing a more detailed flow of the sample dispensing in step S02 of Fig. 4.

### (Fig. 5: Step S0201: Probe Cleaning and Drying)

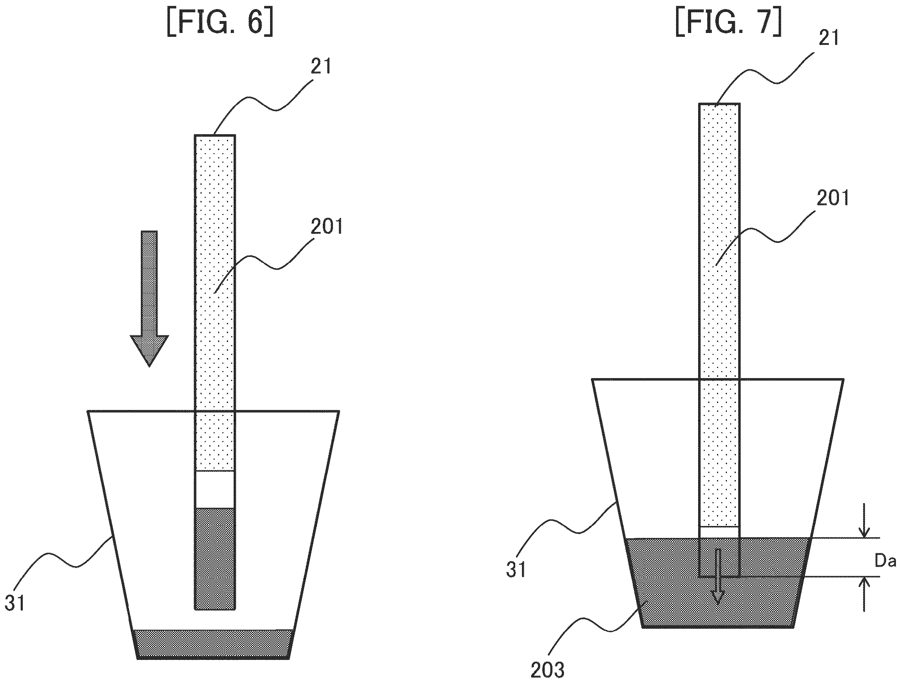

Before entering the sample dispensing, the analysis control unit 2 moves the sample dispensing mechanism 20 to the dispensing mechanism cleaning section 14 by rotational movement and vertical movement, and cleans the inner and outer walls of the dispensing probe 21 with the cleaning water. After the cleaning, vacuum drying is performed to dry the cleaning water adhering to the inner and outer walls of the dispensing probe 21. At this time, the analysis control unit 2 causes the sample dispensing mechanism 20 to aspirate air in the air to form an air layer at the tip of the dispensing probe 21. The air layer is provided to prevent system water 201 (see Fig. 6 and the like) filled in the dispensing flow path from the tip of the dispensing probe 21 from being mixed, in the dispensing probe 21, with the sample subsequently aspirated from the sample container 11.

### (Fig. 5: Step S0202: Sample Aspiration (First phase)

When moving the sample dispensing mechanism 20 to the sample aspiration position 13 by rotational movement and vertical movement, the analysis control unit 2 aspirates a specified amount of the sample from the sample container 11 into the dispensing probe 21. At this time, the sample, the air layer, and the system water 201 are held in the dispensing probe 21. As shown in Fig. 6, the liquids in the dispensing probe 21 have a positional relationship of the sample, the air layer, and the system water 201 in order from a tip side of the dispensing probe 21 upward in the vertical direction.

### (Fig. 5: Step S0203: Sample Discharge (First Phase)

After aspirating the sample, the analysis control unit 2 moves the sample dispensing mechanism 20 to the reaction container 31 set at the sample discharge position by vertical movement and rotational movement, and discharges a specified amount of sample. If the specified amount of discharged sample satisfies an amount required for analysis, the process proceeds to probe cleaning and drying operation in step S0206.

On the other hand, when a set amount of the sample exceeds an amount that can be discharged by the dispensing probe 21 at one time and is less than the amount of the sample required for analysis, the process proceeds to second phase sample aspiration in step S0204.

### (Fig. 5: Step S0204: Sample Aspiration (Second phase)

The analysis control unit 2 moves the sample dispensing mechanism 20 to the same sample aspiration position as in the first phase again, and aspirates a remaining amount of the sample from the sample container into the dispensing probe 21.

### (Fig. 5: Step S0205: Sample Discharge (Second phase)

After aspirating the sample, the analysis control unit 2 moves the sample dispensing mechanism 20 to the reaction container 31 as in the sample discharge in the first phase, and discharges the remaining amount of the sample.

### (Fig. 5: Step S0206: Probe Cleaning and Drying)

After discharging the sample, the analysis control unit 2 moves the sample dispensing mechanism 20 to the dispensing mechanism cleaning section 14 by rotational movement and vertical movement, and cleans and dries the inner and outer walls of the tip of the dispensing probe 21 as in step S0201.

Figs. 6 to 9 are diagrams schematically showing how the dispensing probe 21 moves when the sample dispensing mechanism 20 according to Embodiment 1 performs the second phase sample dispensing. Figs. 6 to 9 show the operation of the dispensing probe 21 in step S0205 to step S0206 in Fig. 5. Figs. 6 to 9 sequentially show a flow of time of the operation at the time of discharge, and each schematic diagram schematically shows a situation at the time of discharge at each elapsed time.

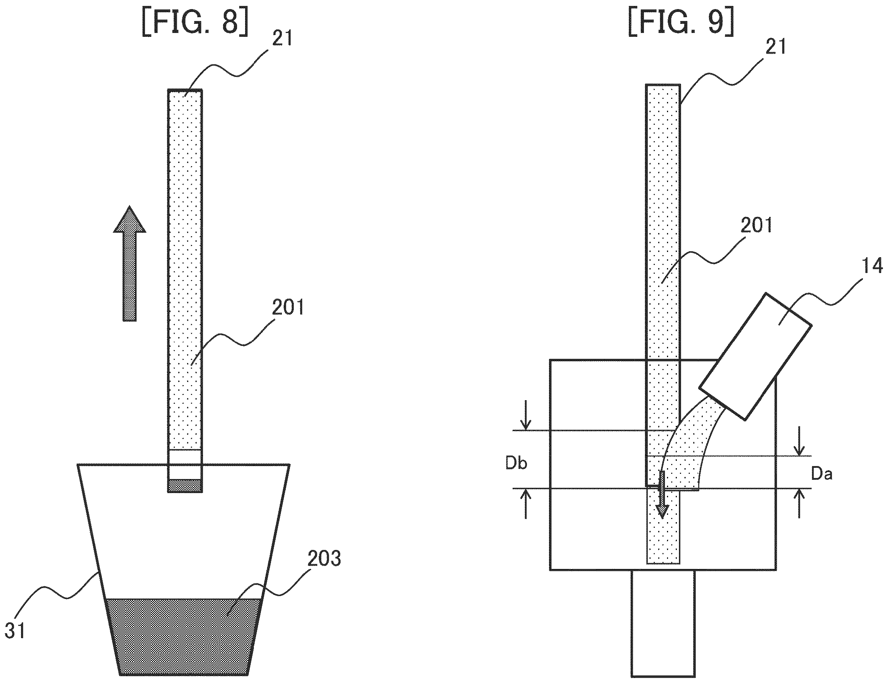

As shown in Fig. 6, the analysis control unit 2 descends the dispensing probe 21 into the reaction container 31. A height when the dispensing probe 21 is descended in the present embodiment may be a height at which the dispensing probe 21 is immersed in the sample solution discharged in the first phase in the reaction container 31 or a height at which the dispensing probe 21 is not immersed, but it is necessary to control the sample dispensing mechanism 20 such that the tip of the dispensing probe 21 is immersed in the sample after the completion of the discharge of the sample. At this time, it is desirable to control the sample dispensing mechanism 20 such that an immersion depth Da from start to the completion of the discharge of the sample is shorter than a specified length. The specified length can be set to be shorter than a length Db (cleaning range Db, see Fig. 9 described later) that can be cleaned by the dispensing mechanism cleaning section 14.

In addition, it is desirable that the analysis control unit 2 preferably controls the sample dispensing mechanism 20 such that the tip of the dispensing probe 21 discharges the sample from above a liquid level of a previously discharged sample in the vertical direction at the start of the discharge of the sample.

As shown in Fig. 7, the analysis control unit 2 then starts the discharge operation. The sample is discharged from the tip of the dispensing probe 21.

For example, the tip of the dispensing probe 21 is immersed in the solution after the sample is discharged, and a descending amount of the dispensing probe 21 is set in advance in operation (a) such that the depth Da is shorter than the cleaning range Db of the dispensing probe 21. It is desirable that Da is at least 1 mm shorter than Db.

As shown in Fig. 8, the analysis control unit 2 ascends the sample dispensing mechanism 20 that completes the sample discharge such that the tip of the dispensing probe 21 is separated from the liquid level. The tip of the dispensing probe 21 ascends from a state of being immersed in the liquid level at the time of ending the sample discharge, thus the sample adhering to the tip of the dispensing probe 21 remains in the liquid in the reaction container 31, and a liquid shortage is improved as compared with the related art. Accordingly, it is possible to stabilize the discharge amount of the liquid as compared with the related art.

As shown in Fig. 9, the analysis control unit 2 then moves the sample dispensing mechanism 20 to the dispensing mechanism cleaning section 14, and the sample adhering to the inner wall of the tip of the dispensing probe 21 is cleaned by pushing out the system water inside the dispensing probe 21. The cleaning water supplied from the dispensing mechanism cleaning section 14 is discharged so as to reach the cleaning range Db, and cleans the sample adhering to the outer wall of the tip of the dispensing probe 21.

Next, effects of the present embodiment will be described.

The automatic analyzer 10 according to Embodiment 1 of the invention described above includes the sample dispensing mechanism 20 having the dispensing probe 21 that discharges the liquid into the reaction container 31, and the analysis control unit 2 that controls the operation of the sample dispensing mechanism 20, and when, with the first liquid contained in the reaction container 31, the second liquid is further discharged, the analysis control unit 2 controls the sample dispensing mechanism 20 such that the tip of the dispensing probe 21 is immersed in the liquid after the discharge of the second liquid is completed.

Accordingly, since a residual discharge solution can be prevented, the discharge amount of the solution can be stabilized and contamination of a tip surface of the dispensing probe 21 with the solution can be reduced. Such control increases an effect obtained as a diameter of the dispensing probe 21 decreases such that a liquid amount to be aspirated decreases, that is, an influence of a liquid amount remaining on the surface increases.

In addition, the analysis control unit 2 further includes the dispensing mechanism cleaning section 14 that controls the sample dispensing mechanism 20 such that the immersion depth Da from the start of discharge to the completion of discharge of the second liquid is shorter than a specified length, more specifically, cleans the outside of the dispensing probe 21, and the specified length is set to be shorter than the length Db that can be cleaned by the dispensing mechanism cleaning section 14, so that there is no possibility of residual cleaning, and it is possible to more reliably prevent an occurrence of a carryover contamination of the sample.

Further, the analysis control unit 2 controls the sample dispensing mechanism 20 such that the tip of the dispensing probe 21 discharges the second liquid from above the liquid level of the liquid in the vertical direction at the start of discharging the second liquid, and thus it is also possible to minimize a possibility that the first liquid comes into contact with the dispensing probe 21 at the time of discharging the second liquid.

In addition, when the first liquid is discharged to the reaction container 31, the analysis control unit 2 controls the sample dispensing mechanism 20 such that the tip of the dispensing probe 21 is immersed in the first liquid after the dispensing of the first liquid is completed, so that the residual discharge solution can also be prevented to stabilize the discharge amount of the solution and contamination of the tip surface of the dispensing probe 21 with the solution can also be reduced.

Further, the dispensing mechanism cleaning section 14 that cleans the outside of the dispensing probe 21 is further provided, and the analysis control unit 2 controls the sample dispensing mechanism 20 such that the immersion depth from the start of discharge to the completion of discharge of the first liquid is shorter than the length Db that can be cleaned by the dispensing mechanism cleaning section 14, so that there is also no possibility of residual cleaning, and it is also possible to more reliably prevent the occurrence of the carryover contamination of the sample.

### < Embodiment 2>

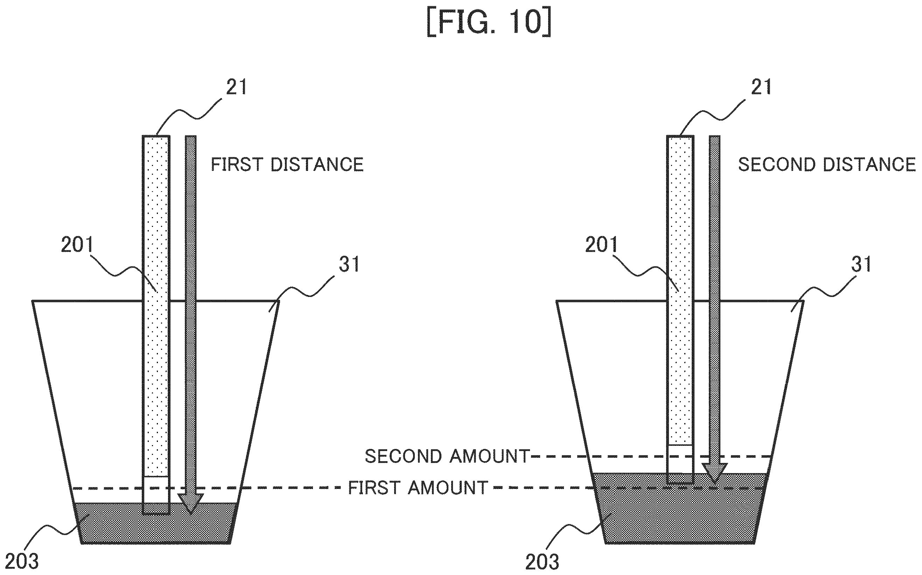

An automatic analyzer and an automatic analysis method according to Embodiment 2 of the invention will be described with reference to Fig. 10.

In the present embodiment, the analysis control unit 2 controls to make the dispensing probe 21 descend from an initial position thereof by a first distance when a sum of liquid amounts of the first liquid and the second liquid is equal to or less than a first amount, and controls to make the dispensing probe 21 descend from the initial position by a second distance smaller than the first distance when the sum of liquid amounts of the first liquid and the second liquid is more than the first amount. Details thereof will be described below.

In the second phase of the sample discharge, the analysis control unit 2 controls a descending height of the dispensing probe 21 according to a sum of amounts of the sample discharged in the first and second phases.

For example, as shown in Fig. 10, the analysis control unit 2 controls to make the dispensing probe 21 descend by the first distance when an amount of a sample 203 discharged in the first and second phases is less than the first amount.

On the other hand, when the amount is more than the first amount and equal to or less than the second amount, as shown in Fig. 10, the dispensing probe 21 is controlled to be descended by the second distance shorter than the first distance.

Further, when the amount of the sample 203 discharged in the first and second phases is more than the second amount, it is conceivable to similarly set the sample 203 in multiple phases.

Other configurations and operation are substantially the same as those in the automatic analyzer and the automatic analysis method according to Embodiment 1 described above, and details thereof are omitted.

In the automatic analyzer and the automatic analysis method of Embodiment 2 of the invention as well, substantially the same effects as those of the automatic analyzer and the automatic analysis method of Embodiment 1 described above can also be obtained.

In the present embodiment, the analysis control unit 2 controls to make the dispensing probe 21 descend from the initial position thereof by the first distance when the sum of the liquid amounts of the first liquid and the second liquid is equal to or less than the first amount, and controls to make the dispensing probe 21 descend from the initial position by the second distance smaller than the first distance when the sum of the liquid amounts of the first liquid and the second liquid is more than the first amount. Therefore, for example, when the sample dispensing amount is large, the dispensing probe 21 can be prevented from being immersed in the sample to a depth exceeding the cleaning range. Therefore, it is possible to cope with a wider dispensing amount.

### <Embodiment 3>

An automatic analyzer and an automatic analysis method according to Embodiment 3 of the invention will be described.

In the present embodiment, the analysis control unit 2 controls the sample dispensing mechanism 20 to ascend the dispensing probe 21 in a period from the start of discharge of the second liquid to the completion of discharge. Details thereof will be described below.

In the present embodiment, in the sample discharge (second phase) in step S0205 of Fig. 5, the analysis control unit 2 controls to make the dispensing probe 21 ascend while the discharge operation is being continued.

That is, the analysis control unit 2 performs control such that the depth Da at which the tip of the dispensing probe 21 is immersed in the solution is not increased with an elapsed time as the liquid level ascends due to the sample discharge. However, it is assumed that the tip of the dispensing probe 21 is kept immersed in the solution at the time of the completion of discharge.

It is also possible to control the sample dispensing mechanism 20 so as to ascend the dispensing probe 21 during the sample discharge (first phase, in the period from the start to the completion of the discharge of the sample) in step S0203 of Fig. 5.

Other configurations and operation are substantially the same as those of the automatic analyzer and the automatic analysis method of either Embodiment 1 or Embodiment 2 described above, and details thereof are omitted.

In the automatic analyzer and the automatic analysis method of Embodiment 3 of the invention as well, substantially the same effects as those of the automatic analyzer and the automatic analysis method of Embodiment 1 described above can also be obtained.

In addition, the analysis control unit 2 controls the sample dispensing mechanism 20 so as to ascend the dispensing probe 21 in a period from the start of discharge of the second liquid to the completion of discharge, thereby making it possible to shorten a length of the tip of the dispensing probe 21 contaminated with the sample as much as possible.

### <Others>

The invention is not limited to the above-described embodiments, and includes various modifications. The above embodiments have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. Another configuration may be added to a part of a configuration in each embodiment, and a part of a configuration in each embodiment may also be deleted or replaced with another configuration.

### Reference Signs List

- 1:: analysis unit
- 2:: analysis control unit
- 3:: display unit
- 4:: memory
- 5:: A/D converter
- 6:: interface
- 7:: keyboard
- 8:: CPU
- 10:: automatic analyzer
- 11:: sample container
- 12:: sample holding section
- 13:: sample aspiration position
- 14:: dispensing mechanism cleaning section (cleaning tank)
- 20:: sample dispensing mechanism
- 21:: dispensing probe
- 22:: dispensing arm
- 23:: vertical and rotary motion section
- 24:: dispensing flow path
- 25:: cylinder
- 26:: plunger
- 27:: plunger driving means
- 28:: valve
- 29:: water supply pump
- 31:: reaction container (container)
- 34:: reaction disk
- 38:: cleaning mechanism
- 39:: measuring section
- 40:: reagent dispensing mechanism
- 41:: reagent container
- 42:: reagent holding section
- 201:: system water
- 203:: sample discharged at the first/second phase

## Claims

1. An automatic analyzer comprising:
a dispensing mechanism having a probe to discharge a liquid into a container; and
a control unit to control operation of the dispensing mechanism, wherein
when, with a first liquid contained in the container, a second liquid is further discharged, the control unit controls the dispensing mechanism so that a tip of the probe is immersed in the liquid after completion of discharge of the second liquid.

2. The automatic analyzer according to Claim 1, wherein the control unit controls the dispensing mechanism so that in a period from start of discharge of the second liquid to completion of discharge, immersion depth is shorter than a specified length.

3. The automatic analyzer according to Claim 2, further comprising:
a cleaning tank to clean an outside of the probe, wherein the specified length is shorter than a length for which cleaning can be performed in the cleaning tank.

4. The automatic analyzer according to Claim 1, wherein, at start of discharge of the second liquid, the control unit controls the dispensing mechanism so that a tip of the probe discharges the second liquid from above a liquid level of the liquid in a vertical direction.

5. The automatic analyzer according to Claim 1, wherein when the first liquid is discharged into the container, the control unit controls the dispensing mechanism so that a tip of the probe is immersed in the first liquid after completion of discharge of the first liquid.

6. The automatic analyzer according to Claim 5, further comprising:
a cleaning tank to clean an outside of the probe, wherein the control unit controls the dispensing mechanism so that immersion depth in a period from start of discharge of the first liquid to completion of discharge is shorter than a length for which cleaning can be performed in the cleaning tank.

7. The automatic analyzer according to Claim 1, wherein the control unit:
controls to make the probe descend from an initial position thereof by a first distance when a sum of liquid amounts of the first liquid and the second liquid is equal to or less than a first amount, and
controls to make the probe descend from the initial position by a second distance smaller than the first distance when the sum of liquid amounts of the first liquid and the second liquid is more than the first amount.

8. The automatic analyzer according to Claim 1, wherein the control unit controls the dispensing mechanism to make the probe ascend in a period from start of discharge of the second liquid to completion of discharge.

9. The automatic analyzer according to Claim 1, wherein the first liquid and the second liquid are the same liquid.

10. The automatic analyzer according to Claim 1, wherein a discharge amount of the first liquid and a discharge amount of the second liquid are the same amount.

11. An automatic analysis method in an automatic analyzer comprising a probe to discharge a liquid into a container and a dispensing mechanism to move the prove in a vertical direction, the method comprising:
a step of discharging a first liquid into the container; and
a step of discharging a second liquid into the container with the first liquid contained, wherein
after completion of discharge of the second liquid, a tip of the probe is immersed in the liquid.
